# EUROPÄISCHE PATENTSCHRIFT

(11) **EP 1 424 261 B1**
(45) Veröffentlichungstag und Bekanntmachung des Hinweises auf die Patenterteilung: **04.02.2009**
(21) Anmeldenummer: 03027106.8
(22) Anmeldetag: 26.11.2003
(51) Int. Cl.: B62D 1/28, B62D 15/02

(54) **Fahrerassistenzvorrichtung und Fahrerassistenzverfahren**
Method and device for assisting a driver of a vehicle
Dispositif et procédé d'assistance au conducteur d'un véhicule

(30) Priorität: 29.11.2002 DE 10255719
(43) Veröffentlichungstag der Anmeldung: 02.06.2004
(73) Patentinhaber: AUDI AG, 85045 Ingolstadt (DE)
(72) Erfinder: Buschardt, Boris, Dr., 85049 Ingolstadt (DE)
(74) Vertreter: Thielmann, Frank

(56) Entgegenhaltungen:
- EP-A- 0 354 561
- EP-A- 0 640 903
- DE-A- 19 648 497
- DE-A- 19 702 383
- DE-A- 19 830 548

## Beschreibung

Die vorliegende Erfindung betrifft eine Fahrerassistenzvorrichtung zur Unterstützung eines Fahrers eines Fahrzeugs bei einer Kursbestimmung umfassend ein Fahrbahnverlauferfassungssystem zum Erfassen eines Fahrbahnverlaufs und eine Sollkursbestimmungseinheit zum Bestimmen eines Sollkurses anhand des erfassten Fahrbahnverlaufs, wobei der Sollkurs durch den Fahrbahnverlauf, zumindest im Wesentlichen, begrenzt ist.

Ein derartiges Fahrerassistenzsystem ist als "Heading Control" bekannt. Bei diesem System wird durch eine Sollkursbestimmungseinheit ein Sollkurs bestimmt, der eine minimale Querabweichung von einer Fahrspurmitte aufweist. Die Fahrspur ist dabei ein Teilbereich der Fahrbahn, der bei Beibehaltung des Sollkurses nicht verlassen wird. Bei diesem Fahrerassistenzsystem ist vorgesehen, den Fahrer des Fahrzeugs durch zusätzliche synthetische Lenkmomente so zu unterstützen, dass dieser nahezu automatisch dem vorbestimmten Sollkurs folgt. Nachteilig an dieser Unterstützungsstrategie ist jedoch, dass der Fahrer quasi "gezwungen" wird, möglichst exakt in der Mitte der Fahrspur zu fahren. Dies wird vom Fahrer bei ruhigen Fahrten auf Autobahnen als angenehm empfunden, ist jedoch nicht geeignet für sportliches Fahren auf Landstraßen oder Rennstrecken.

Eine gattungsgemäße Fahrerassistenzvorrichtung ist auch aus der EP 0 354 561 bekannt. Als Fahrbahnverlauferfassungssystem weist die in dieser Druckschrift beschriebene Fahrerassistenzvorrichtung zwei Videokameras auf. Außerdem ist ein Mittel zum Bestimmen eines zulässigen Fahrbahnbereichs auf der Basis eines durch die Videokameras aufgenommenen Bildes vorgesehen. Daneben weist die Fahrassistenzvorrichtung ein Mittel zum Setzen eines Zielkurses im zulässigen Fahrbahnbereich auf. Nach Bestimmung des momentanen Fahrzustands wird das Fahrzeug durch Mittel zum Lenken des Fahrzeugs entlang des Zielkurses bewegt, der auf der Basis der Fahrgeschwindigkeit des Fahrzeugs berechnet wird, so dass bei einer kurvigen Wegstrecke die Krümmung des Zielkurses zunimmt, wenn die Fahrgeschwindigkeit des Fahrzeugs abnimmt und umgekehrt. Trotzdem scheint eine derartige Fahrerassistenzvorrichtung ungeeignet für sportliches Fahren auf Landstraßen oder Rennstrecken, da keine dafür zweckmäßige Bestimmung des Zielkurses angegeben ist. Außerdem wird dem Fahrer bei Verwendung dieser Fahrerassistenzvorrichtung eine äußerst passive Rolle zugeordnet. Es ist nämlich keine Einwirkung des Fahrers auf die Lenkung vorgesehen, so dass dieser keinen Einfluß auf den Kurs des Fahrzeugs nehmen kann. Gerade bei sportlichem Fahren auf Landstraßen oder Rennstrecken ist es jedoch besonders erwünscht, dem Fahrer die Verfügungsgewalt über das Fahrzeug zu überlassen, um den Fahrspaß zu erhalten.

Ferner ist aus der DE 198 30 548 A1 eine Fahrerassistenzvorrichtung bekannt, die eine Fahrspur erkennt, auf der sich das Fahrzeug bewegt, und das Lenkdrehmoment des Fahrzeugs so steuert, dass sich das Fahrzeug entlang der Fahrspur bewegt. Eine Vielzahl von Bezugslinien, die sich entlang der Fahrspur erstrecken und in einer Breitenrichtung der Fahrspur parallel zueinander angeordnet sind, wird eingestellt, und daraus eine Zielbewegungslinie in Übereinstimmung mit einem Bewegungszustand des Fahrzeugs ausgewählt. Zum Angleichen der angenommenen Bewegungslinie des Fahrzeug an die gewählte Zielbewegungslinie erzeugt die Fahrerassistenzvorrichtung ein Lenkdrehmoment. Erkennt die Fahrerassistenzvorrichtung, dass der Fahrer bewußt von der Zielbewegungslinie wegsteuert, wählt es eine andere Bezugslinie, die dem vom Fahrer gesteuerten Kurs am nächsten kommt, als neue Zielbewegungslinie aus.

Der Erfindung liegt daher die Aufgabe zugrunde, eine Fahrerassistenzvorrichtung bereitzustellen, die einem Fahrer die Führung eines Fahrzeugs beim sportlichen Fahren auf Landstraßen oder Rennstrecken zwar erlaubt, ihm jedoch die Suche nach einem Idealkurs erleichtert. Der Erfindung liegt außerdem die Aufgabe zugrunde, ein entsprechendes Fahrerassistenzverfahren bereitzustellen.

Diese Aufgabe wird durch eine Fahrerassistenzvorrichtung gemäß dem Anspruch 1 gelöst.

Der Sollkurs kann basierend auf einem Fahrermodell bestimmt werden, das das Verhalten eines "idealen Rennfahrers" nachbildet. Für das Fahrermodell sind sowohl klassische regelungstechnische Ansätze als auch nichtlineare Regelungen wie zum Beispiel Fuzzy, Neuronale Netze etc. denkbar. Der Lenkmomentaktuator ist derart ausgebildet, dass durch den Lenkmomentaktuator jeweils eine synthetische Zusatzkraft erzeugt wird, die derart auf ein Lenkrad des Fahrzeugs wirkt, dass das Lenkrad leichter in eine Lenkrichtung bewegt werden kann, durch die das Fahrzeug in Richtung Sollkurs gesteuert wird, als in eine entgegengesetzte Lenkrichtung. Die Erfindung weist insbesondere zwei wesentliche Vorteile auf. Einerseits wird durch die Erfindung ein Sollkurs generiert, der insbesondere einer sportlichen Fahrweise auf Landstraßen und Rennstrecken angepasst ist, so dass folglich nicht nur auf Autobahnen oder geraden Straßen eine "Ideallinie" beschrieben werden kann. Andererseits wird durch die erfindungsgemäße Unterstützungsstrategie auch einem unerfahrenen Fahrer ermöglicht, mit hohen Geschwindigkeiten schwierige Strecken zu fahren und somit Streckenzeiten zu erreichen, die sonst nur erfahrenen Rennfahrern vorbehalten sind. Da der Fahrer aber weiterhin die Macht über die Lenkung und somit das Fahrzeug behält, bleibt der Spaß am sportlichen Fahren trotz Einsatz der Fahrerassistenzvorrichtung vollständig erhalten. Darüber hinaus lernt der Fahrer aufgrund der Unterstützung durch die auf das Lenkrad wirkenden synthetischen Zusatzkräfte die "Ideallinie" selbst zu erkennen, so dass er nach längerer Verwendung der erfindungsgemäßen Fahrerassistenzvorrichtung in der Lage ist, selbständig fahrzeitoptimiert zu fahren.

In einer ersten vorteilhaften Ausgestaltung der Erfindung kann die Fahrerassistenzvorrichtung eine Sollenkwinkelbestimmungseinheit zum Bestimmen eines Sollenkwinkelverlaufs anhand des erfassten Sollkurses umfassen, wobei die Sollenkwinkelbestimmungseinheit derart mit dem Lenkmomentaktuator gekoppelt ist, dass durch den Lenkmomentaktuator jeweils eine synthetische Zusatzkraft erzeugt wird, durch die das Lenkrad leichter in die Lenkrichtung eines jeweiligen Sollenkwinkels des Sollenkwinkelverlaufs bewegt werden kann als in eine entgegengesetzte Lenkrichtung.

Eine weitere besonders vorteilhafte Ausgestaltung der Erfindung sieht vor, dass das Fahrbahnverlauferfassungssystem zum Erfassen des Fahrbahnverlaufs ein Bildverarbeitungssystem, insbesondere mit mindestens einer Videokamera, und/oder ein GPS-Standortbestimmungssystem und mindestens eine digitale Straßenkarte umfasst. Durch den Einsatz eines Bildverarbeitungssystems kann der Fahrbahnverlauf unabhängig von einer Kartierung der entsprechenden Straße auf einer Straßenkarte in Vorausschau bestimmt werden. Zur Beschreibung des Fahrbahnverlaufs in Vorausschau wird ein Modell beispielsweise durch Polynome oder Klothoiden zugrunde gelegt. Alternativ oder zusätzlich zu dem Bildverarbeitungssystem kann ein GPS-Standortbestimmungssystem in Kombination mit mindestens einer digitalen Straßenkarte verwendet werden. Der durch das GPS-Standortbestimmungssystem ermittelte Standort ist einem Punkt auf der mindestens einen digitalen Straßenkarte zugeordnet, so dass der Fahrbahnverlauf in Vorausschau der mindestens einen digitalen Straßenkarte entnommen werden kann. Vorteilhaft an dieser Weiterbildung ist, dass der Fahrbahnverlauf auch bei sehr schlechten Sichtverhältnissen exakt erfasst werden kann.

Vorteilhafterweise kann das Fahrbahnverlauferfassungssystem auch derart ausgebildet sein, dass ein Fahrzustand des Fahrzeugs, insbesondere eine Geschwindigkeit und/oder eine Position und/oder eine Bewegungsrichtung des Fahrzeugs, durch das Fahrbahnverlauferfassungssystem erfassbar ist. Unter dem Begriff Fahrzustand ist im Sinne der Erfindung der aktuelle Fahrzustand und/oder der Fahrzustand in der Vergangenheit zu verstehen. Die aufgeführten Parameter lassen sich ebenso wie der Fahrbahnverlauf anhand der durch das Fahrbahnverlauferfassungssystem aufgenommenen Bilder oder die Kombination von GPS-Standortbestimmungssystem und mindestens einer digitalen Straßenkarte bestimmen, so dass kein zusätzliches System für die Erfassung dieser Parameter zur Verfügung gestellt werden muss.

Alternativ oder zusätzlich kann die Fahrerassistenzvorrichtung jedoch auch mindestens einen Fahrzeugsensor zum Erfassen eines aktuellen Fahrzustands des Fahrzeugs, insbesondere einer Geschwindigkeit und/oder einer Position und/oder einer Bewegungsrichtung und/oder einer Lenkradstellung und/oder einer Räderstellung des Fahrzeugs und/oder eines Reibwertes zwischen Fahrbahn und mindestens eines Reifens des Fahrzeugs und/oder einer Querbeschleunigungsgrenze des Fahrzeugs und/oder einer Schräglaufsteifigkeit mindestens eines Reifens des Fahrzeugs und/oder mindestens einer maximal auf das Fahrzeug übertragbaren Seitenkraft umfassen. Vorteilhaft an dieser Ausgestaltung ist, dass der jeweilige Fahrzeugsensor seinem Verwendungszweck optimal angepasst werden kann, ohne gleichzeitig auch der Verwendung als Fahrbahnverlauferfassungssystem gerecht werden zu müssen.

Eine weitere vorteilhafte Weiterbildung der Erfindung sieht vor, dass die Fahrerassistenzvorrichtung eine Istkursbestimmungseinheit zum Bestimmen eines Istkurses des Fahrzeugs anhand des erfassten Fahrzustands aufweist, wobei der Istkurs einem zukünftigen potentiellen Kurs des Fahrzeugs ohne Unterstützung durch die Fahrerassistenzvorrichtung entspricht. Zur Beschreibung dieses Istkurses kann ein Modell beispielsweise durch Polynome oder Klothoiden zugrunde gelegt werden. Die Bestimmung des Istkurses ist besonders vorteilhaft, da mit Hilfe dieser Kenntnis am besten ermittelt werden kann, wie der Sollkurs ausgehend von der Istposition am einfachsten zu erreichen ist.

In einer weiteren Ausgestaltung der erfindungsgemäßen Fahrerassistenzvorrichtung ist vorgesehen, dass die Fahrerassistenzvorrichtung eine Speichereinheit aufweist, wobei in der Speichereinheit mindestens ein Fahrzeugparameter, insbesondere eine Fahrzeuggeometrie und/oder eine Reifeneigenschaft, abgelegt ist. Beinhaltet können beispielsweise auch eine Fahrzeugbreite, eine Spurbreite und/oder ein Radstand des Fahrzeugs sein. Neben den genannten Fahrzeugparametern können in der Speichereinheit weitere Fahrzeugparameter abgelegt sein, die das Fahrverhalten des Fahrzeugs entscheidend beeinflussen wie zum Beispiel eine Massenträgheit, eine Massenverteilung, eine Drehträgheit und eine Lenkübersetzung des Fahrzeugs.

Die Sollkursbestimmungseinheit kann derart ausgebildet und mit dem Fahrbahnverlauferfassungssystem und/oder mit dem mindestens einen Fahrzeugsensor und/oder mit der Istkursbestimmungseinheit und/oder mit der Speichereinheit gekoppelt sein, dass bei der Bestimmung des Sollkurses durch die Sollkursbestimmungseinheit der Fahrzustand und/oder der Istkurs und/oder der mindestens eine Fahrzeugparameter eingeht. Der Fahrzustand ist insbesondere dann bei der Bestimmung des Sollkurses zu berücksichtigen, wenn der Sollkurs ausgehend von der aktuellen Position des Fahrzeugs bestimmt werden soll, eine aktuelle Fahrgeschwindigkeit beibehalten werden soll und der Sollkurs entweder querbeschleunigungsminimiert und/oder kraftschlussbeanspruchungsminimiert bestimmt wird. Der Istkurs sollte bei der Bestimmung des Sollkurses eingehen, wenn die Möglichkeit besteht, dass das Fahrzeug zukünftig einen Punkt erreicht, von dem aus der Sollkurs optimalerweise begonnen werden kann. Der mindestens eine Fahrzeugparameter sollte bei der Bestimmung des Sollkurses berücksichtigt werden, wenn dieser die Kraftschlussbeanspruchung und/oder die Querbeschleunigung und/oder die Fahrzeit begrenzt. Durch die Berücksichtigung mehrerer Faktoren kann der Sollkurs erheblich optimiert werden.

Eine weitere besonders vorteilhafte Ausgestaltung der Erfindung sieht vor, dass die Solllenkwinkelbestimmungseinheit derart ausgebildet ist und mit dem Fahrbahnverlauferfassungssystem und/oder mit dem mindestens einen Fahrzeugsensor und/oder mit der Istkursbestimmungseinheit und/oder mit der Speichereinheit gekoppelt ist, dass bei der Bestimmung des Solllenkwinkelverlaufs durch die Solllenkwinkelbestimmungseinheit der aktuelle Fahrzustand und/oder der Istkurs und/oder der mindestens eine Fahrzeugparameter eingeht. Wird der aktuelle Fahrzustand bei der Bestimmung des Solllenkwinkelverlaufs berücksichtigt, kann ein besonders optimaler Übergang zwischen dem aktuellen Fahrzustand und dem gewünschten Fahrzustand realisiert werden. Dies gilt auch dann, wenn bei der Bestimmung des Solllenkwinkelverlaufs der Istkurs berücksichtigt wird, da bei Kenntnis des Istkurses auch ein späterer Zeitpunkt abgewartet werden kann, ab dem die Fahrerassistenzvorrichtung eingreift und tatsächlich Solllenkwinkel festgelegt werden. Der mindestens eine Fahrzeugparameter ist bei der Bestimmung des Solllenkwinkelverlaufs insbesondere dann zu berücksichtigen, wenn der mindestens eine Fahrzeugparameter bestimmte Lenkwinkelverläufe nicht zulässt. Je mehr Faktoren bei der Bestimmung des Solllenkwinkelverlaufs berücksichtigt werden, desto optimaler ist der Solllenkwinkelverlauf auf das Fahrzeug und den aktuellen Fahrzustand abgestimmt. Auch der Lenkmomentaktuator kann derart ausgebildet und mit dem Fahrbahnverlauferfassungssystem und/oder mit dem mindestens einen Fahrzeugsensor und/oder mit der Istkursbestimmungseinheit und/oder mit der Speichereinheit gekoppelt sein, dass bei der Bestimmung der synthetischen Zusatzkraft der Fahrzustand und/oder der Istkurs und/oder der mindestens eine Fahrzeugparameter eingeht.

Das Fahrbahnverlauferfassungssystem kann weiterhin derart ausgebildet sein, dass ein Fahrspurverlauf ermittelt werden kann, der durch den Fahrbahnverlauf begrenzt ist, wobei der durch die Sollkursbestimmungseinheit bestimmte Sollkurs durch den Fahrspurverlauf, zumindest im Wesentlichen, begrenzt ist. Wenn die Fahrbahn besonders breit ist und möglichst nicht vollständig durch das Fahrzeug genutzt werden sollte, wie beispielsweise bei einer zwei- oder mehrspurigen Straße oder einer Straße mit Gegenverkehr, ist es notwendig, den Sollkurs auf den Fahrspurverlauf zu begrenzen, der durch den Bereich des Fahrbahnverlaufs gekennzeichnet ist, der tatsächlich von dem Fahrzeug befahren werden darf. Diese Ausgestaltung der Erfindung ist insbesondere für Fahrten auf öffentlichen Straßen vorgesehen. Wird die erfindungsgemäße Fahrerassistenzvorrichtung jedoch für Fahrten auf abgesperrten Rennstrecken verwendet, kann die gesamte Breite der Fahrbahn ausgenutzt werden.

Eine weitere besonders vorteilhafte Ausgestaltung der Erfindung sieht vor, dass die von dem Lenkmomentaktuator erzeugte und auf das Lenkrad wirkende Zusatzkraft ein Zusatzlenkmoment und/oder eine Zusatzreibung und/oder eine Zusatzdämpfung ist. Während durch ein synthetisches Zusatzlenkmoment in die optimale Lenkrichtung eine direkte Unterstützung des Fahrers praktisch realisiert wird, erfolgt durch eine alternative oder zusätzliche synthetische Zusatzreibung und/oder Zusatzdämpfung in eine einem Solllenkwinkel entgegengesetzte Lenkrichtung eine eher indirekte Unterstützung des Fahrers.

Die obige Aufgabe wird ebenfalls durch ein Fahrerassistenzverfahren zur Unterstützung eines Fahrers eines Fahrzeugs bei einer Kursbestimmung gelöst, das folgende Schritte umfasst. Zunächst wird ein Fahrbahnverlauf erfasst. Als nächster Schritt folgt ein Bestimmen eines Sollkurses anhand des erfassten Fahrbahnverlaufs, wobei der Sollkurs querbeschleunigungsminimiert und/oder kraftschlussbeanspruchungsminimiert und/oder fahrzeitminimiert ist und durch den Fahrbahnverlauf, zumindest im Wesentlichen, begrenzt ist. Schließlich wird eine synthetische Zusatzkraft erzeugt, die derart auf ein Lenkrad des Fahrzeugs wirkt, dass das Lenkrad leichter in eine Lenkrichtung bewegt werden kann, durch die das Fahrzeug in Richtung Sollkurs gesteuert wird, als in eine entgegengesetzte Lenkrichtung. Außerdem können die im Zusammenhang mit der erfindungsgemäßen Fahrerassistenzvorrichtung beschriebenen Ausgestaltungen und Vorteile in analoger Weise auch bei dem erfindungsgemäßen Fahrerassistenzverfahren realisiert werden.

Weitere Vorteile und Eigenschaften der Erfindung gehen aus den im Folgenden anhand von Zeichnungen beschriebenen Ausführungsformen hervor. Es zeigen
- Fig. 1: eine schematisch dargestellte Ausführungsform einer erfindungsgemäßen Fahrerassistenzvorrichtung; und
- Fig. 2: eine schematisch dargestellte Fahrbahn mit Fahrspur.

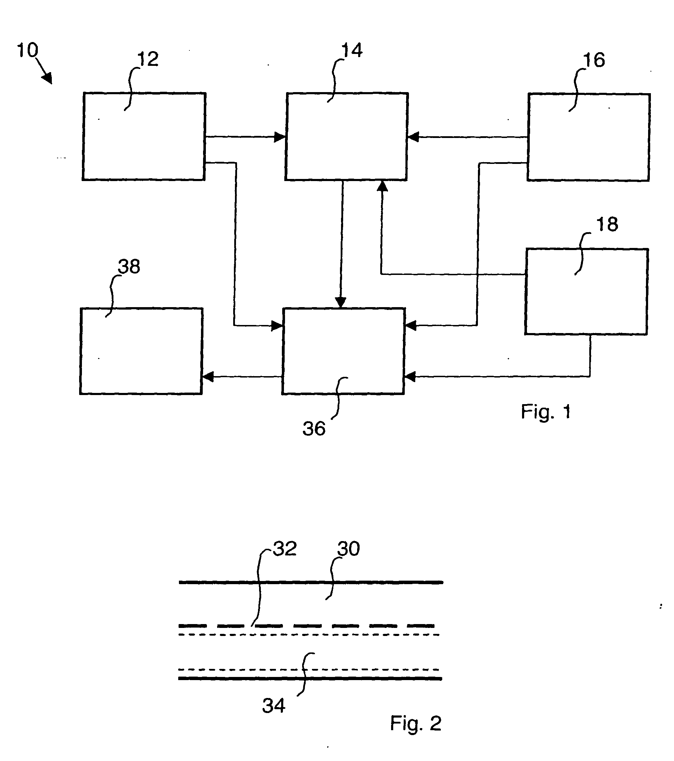

In Fig. 1 ist eine Ausführungsform einer erfindungsgemäßen Fahrerassistenzvorrichtung 10 schematisch dargestellt. Durch ein Fahrbahnverlauferfassungssystem 12 wird ein Fahrbahnverlauf erfasst, den ein Fahrzeug zu passieren hat. Das Fahrbahnverlauferfassungssystem 12 kann ein Bildverarbeitungssystem, insbesondere mit Videokameras, aufweisen, das am Fahrzeug so montiert sind, dass die vor dem Fahrzeug befindliche Fahrbahn gut erfasst werden kann. Zur Beschreibung des Fahrbahnverlaufs wird ein Modell zum Beispiel durch Polynome oder Klothoiden zugrunde gelegt. Mit Hilfe des Bildverarbeitungssystems kann allerdings auch die Position des Fahrzeugs auf der Fahrbahn bestimmt werden, indem die aufgenommenen Bilder entsprechend ausgewertet werden. Neben der Position des Fahrzeugs auf der Fahrbahn kann auch die Geschwindigkeit beziehungsweise die Bewegungsrichtung mit Hilfe der aufgenommenen Bilddaten berechnet werden. Alternativ oder zusätzlich zu dem Bildverarbeitungssystem kann das Fahrbahnverlauferfassungssystem 12 auch ein GPS-Standortbestimmungssystem und mindestens eine digitale Straßenkarte umfassen. Auch mit Hilfe dieser Informationsquellen gewonnene Daten können zur Bestimmung des Fahrbahnverlaufs herangezogen werden. Daneben lassen sich andere Parameter des aktuellen Fahrzustands des Fahrzeugs auf diese Weise berechnen. Besonders viel Sicherheit bietet ein redundantes System, das sowohl ein Bildverarbeitungssystem als auch ein GPS-Standortbestimmungssystem mit mindestens einer digitalen Straßenkarte umfasst. Die Ergebnisse der beiden Systeme können dann verglichen werden, wobei bei einer starken Abweichung eine Fehlermeldung generierbar ist. In Abweichung zu der in Fig. 1 dargestellten Ausführungsform der erfindungsgemäßen Fahrerassistenzvorrichtung 10 kann neben dem Fahrbahnverlauferfassungssystem 12 auch mindestens ein Fahrzeugsensor zum Erfassen eines aktuellen Fahrzustands des Fahrzeugs vorgesehen sein. Der mindestens eine Fahrzeugsensor kann dann insbesondere diejenigen Parameter erfassen, die durch das Fahrbahnverlauferfassungssystem 12 nicht bestimmt werden können. Beispielsweise kann der mindestens eine Fahrzeugsensor zur Erfassung der Lenkradstellung oder einer Räderstellung des Fahrzeugs ausgebildet sein.

Der durch das Fahrbahnverlauferfassungssystem 12 ermittelte Fahrbahnverlauf kann an eine Sollkursbestimmungseinheit 14 übermittelt werden, die zur Bestimmung eines Sollkurses anhand des erfassten Fahrbahnverlaufs ausgebildet ist. Der Sollkurs wird basierend auf einem Fahrermodell, das das Verhalten eines idealen Rennfahrers nachbildet, berechnet. Das Fahrermodell kann dabei querbeschleunigungsminimiert, kraftschlussbeanspruchungsminimiert und/oder fahrzeitminimiert wirken. Dabei muss die Nebenbedingung eingehalten werden, dass das Fahrzeug die Fahrbahn nicht oder nur geringfügig verlassen darf. Für das Fahrermodell sind sowohl klassische regelungstechnische Ansätze als auch nichtlineare Regelungen wie zum Beispiel Fuzzy, Neuronale Netze etc. denkbar. Der Sollkurs kann außerdem dadurch optimiert werden, dass auch der erfasste Fahrzustand des Fahrzeugs in die Berechnung des Sollkurses einfließt. Außerdem kann mindestens ein Fahrzeugparameter berücksichtigt werden, der in einer Speichereinheit 16 abgelegt ist und an die Sollkursbestimmungseinheit 14 übermittelt werden kann. Als in die Berechnung eingehende Größen können insbesondere eine Querbeschleunigungsgrenze des Fahrzeugs und/oder eine Schräglaufsteifigkeit mindestens eines Reifens des Fahrzeugs und/oder mindestens eine maximal übertragbare Seitenkraft vorgesehen sein. Außerdem kann in die Ermittlung des Sollkurses ein Istkurs des Fahrzeugs eingehen, wobei der Istkurs einem zukünftigen potentiellen Kurs des Fahrzeugs ohne Unterstützung durch die Fahrerassistenzvorrichtung 10 entspricht. Der Istkurs wird durch eine Istkursbestimmungseinheit 18 ermittelt und kann dann an die Sollkursbestimmungseinheit 14 weitergeleitet werden. Um das Fahrzeug möglichst schnell auf eine Ideallinie zu bringen, können zwei Varianten bei der Sollkursbestimmung vorgesehen sein. In einer Variante wird der Sollkurs ausgehend von dem Fahrzustand bestimmt. Anfänglich entspricht dieser Sollkurs folglich nicht der Ideallinie. In einer anderen Variante wird der Sollkurs unabhängig von dem Fahrzustand ermittelt, wobei außerdem zu bestimmen ist, wie das Fahrzeug ausgehend von dem aktuellen Fahrzustand auf den Sollkurs gebracht werden kann.

Wie bereits oben erörtert, ist der Sollkurs prinzipiell begrenzt durch den Fahrbahnverlauf. Zur Fahrt auf öffentlichen Straßen ist es jedoch sinnvoll, den Sollkurs räumlich stärker zu begrenzen. Zu diesem Zweck wird eine Fahrspur und ein dazugehöriger Fahrspurverlauf festgelegt, den das Fahrzeug im Wesentlichen nicht verlassen sollte. Ein Beispiel für diese Ausgestaltung ist in Fig. 2 abgebildet. In Fig. 2 ist eine Fahrbahn 30 gezeigt, die einen Mittelstreifen 32 aufweist. Das Fahrzeug soll sich nur auf einer Seite des Mittelstreifens 32 bewegen und weder zu nahe an den Mittelstreifen 32 herankommen, noch einen Rand der Fahrbahn 30 streifen. Aus diesem Grund ist eine Fahrspur 34 vorgesehen, die das Fahrzeug, wenn es dem Sollkurs folgt, nicht verlässt.

Der Fahrspurverlauf wird wie der Fahrbahnverlauf von dem in Fig. 1 dargestellten Fahrbahnverlauferfassungssystem 12 erfasst und der Sollkursbestimmungseinheit 14 übermittelt. Anhand des Sollkurses wird durch eine Solllenkwinkelbestimmungseinheit 36 ein Solllenkwinkelverlauf bestimmt. Dabei kann insbesondere die Dynamik des Fahrzeugs berücksichtigt werden, die sich unter anderem aus den in der Speichereinheit 16 abgelegten Fahrzeugparametern ergibt. Daneben kann bei der Bestimmung des Lenkwinkelverlaufs der Fahrzustand berücksichtigt werden, um beispielsweise eine starke Änderung des Lenkwinkels zu vermeiden. Durch den ermittelten Sollenkwinkelverlauf wird das Fahrzeug möglichst optimal auf dem Sollkurs gehalten. Falls der Sollkurs nicht bei der aktuellen Position des Fahrzeugs beginnt, ist der Sollenkwinkelverlauf so zu bestimmen, dass das Fahrzeug erst einmal dem Sollkurs angenähert wird. Zu diesem Zweck kann auch der Istkurs bei der Bestimmung des Sollenkwinkelverlaufs berücksichtigt werden. Danach entspricht der Sollenkwinkelverlauf den Anforderungen des Sollkurses. Da die erfindungsgemäße Fahrerassistenzvorrichtung jedoch nicht dazu bestimmt ist, die Steuerung des Lenkrads zu übernehmen, sondern lediglich den Fahrer bei der Findung des optimalen Kurses zu unterstützen, ist ein Lenkmomentaktuator 38 vorgesehen, der eine Zusatzkraft erzeugt, die auf das Lenkrad des Fahrzeugs derart wirkt, dass das Lenkrad leichter in Richtung eines jeweiligen Solllenkwinkels des Solllenkwinkelverlaufs bewegt werden kann, als in eine entgegengesetzte Richtung. Auf diese Weise erhält der Fahrer eine optimale Unterstützung. Die Zusatzkraft kann als Zusatzlenkmoment, als Zusatzreibung und/oder als Zusatzdämpfung ausgebildet sein. Während das Zusatzlenkmoment in Richtung des jeweiligen Solllenkwinkels wirkt, wird die synthetische Zusatzreibung und/oder Zusatzdämpfung in Gegenrichtung zum jeweiligen Solllenkwinkel erzeugt. Die Lenkbewegungen des Fahrers werden auf diese Art und Weise direkt beziehungsweise indirekt in die richtige Richtung dirigiert. Die Erzeugung der synthetischen Zusatzkräfte kann durch gezielte Beeinflussung einer elektrischen Servolenkung erfolgen. Der Lenkmomentaktuator 38 ist in diesem Fall Teil der elektrischen Servolenkung. Die synthetischen Zusatzkräfte können aber auch durch Einbau eines zusätzlichen elektrischen oder hydraulischen Lenkmomentaktuators in die Lenksäule beziehungsweise an das Lenkgetriebe erzeugt werden. Daneben ist bei einer Steer-by-wire-Lenkung eine Erzeugung der synthetischen Zusatzkräfte durch einen in dieses System integrierten Lenkmomentaktuator möglich.

Alternativ zu der in Fig. 1 gezeigten Fahrerassistenzvorrichtung kann auch ohne vorherige Bestimmung des Sollenkwinkelverlaufs eine Unterstützung durch den Lenkmomentaktuator erfolgen. In diesem Fall ist der Lenkmomentaktuator nicht indirekt über die Sollenkwinkelbestimmungseinheit sondern direkt mit der Sollkursbestimmungseinheit gekoppelt. Die anderen in Fig. 1 mit der Sollenkwinkelbestimmungseinheit verbundenen Einheiten können dann direkt mit dem Lenkmomentaktuator verbunden sein und Daten auf diesen übertragen, die dann bei der jeweiligen Zusatzkraft berücksichtigt werden bzw. in diese eingehen.

Weitere Modifikationen oder Kombinationen der beschriebenen Ausführungsformen sind für den Fachmann offensichtlich.

## Patentansprüche

1. Fahrerassistenzvorrichtung zur Unterstützung eines Fahrers eines Fahrzeugs bei einer Kursbestimmung umfassend
- ein Fahrbahnverlauferfassungssystem (12) zum Erfassen eines Fahrbahnverlaufs,
- eine Sollkursbestimmungseinheit (14) zum Bestimmen eines Sollkurses anhand des erfassten Fahrbahnverlaufs, wobei der Sollkurs zumindest durch den Fahrbahnverlauf begrenzt ist, und
- einen Lenkmomentaktuator (38) zum Erzeugen einer synthetischen Zusatzkraft, die derart auf ein Lenkrad des Fahrzeugs wirkt, dass das Lenkrad leichter in eine Lenkrichtung bewegt werden kann, durch die das Fahrzeug in Richtung Sollkurs gesteuert wird, als in eine entgegengesetzte Lenkrichtung
**dadurch gekennzeichnet dass**
- die Sollkursbestimmungseinheit (14) derart ausgelegt ist, dass den Sollkurs so bestimmt wird, dass mindestens eines der folgenden Fahrkriterien minimiert ist:
- Fahrzeit
- Kraftschlussbeanspruchung
wobei bei einer Minimierung der Kraftschlussbeanspruchung mindestens einer der folgenden Werte als variabel berücksichtigt wird:
- ein Reibwert zwischen einer Fahrbahn und mindestens einem Reifen
- eine Schräglaufsteifigkeit mindestens eines Reifens

2. Fahrerassistenzvorrichtung nach Anspruch 1,
**dadurch gekennzeichnet,**
**dass** die Fahrerassistenzvorrichtung eine Solllenkwinkelbestimmungseinheit (36) zum Bestimmen eines Solllenkwinkelverlaufs
anhand des erfassten Sollkurses umfasst, wobei die Solllenkwinkelbestimmungseinheit (36) derart mit dem Lenkmomentaktuator (38) gekoppelt ist, dass durch den Lenkmomentaktuätor (38) jeweils eine synthetische Zusatzkraft erzeugt wird, durch die das Lenkrad leichter in die Lenkrichtung eines jeweiligen Solllenkwinkels des Solllenkwinkelverlaufs bewegt werden kann als in eine entgegengesetzte Lenkrichtung.

3. Fahrerassistenzvorrichtung nach einem der Ansprüche 1 oder 2,
**dadurch gekennzeichnet,**
**dass** das Fahrbahnverlauferfassungssystem (12) zum Erfassen des Fahrbahnverlaufs ein Bildverarbeitungssystem, insbesondere mit einer Videokamera, und/oder ein GPS-Standortbestimmungssystem und mindestens eine digitale Straßenkarte umfasst.

4. Fahrerassistenzvorrichtung nach einem der vorhergehenden Ansprüche,
**dadurch gekennzeichnet,**
**dass** das Fahrbahnverlauferfassungssystem (12) derart ausgebildet ist, dass ein Fahrzustand des Fahrzeugs, insbesondere eine Geschwindigkeit und/oder eine Position und/oder eine Bewegungsrichtung des Fahrzeugs, durch das Fahrbahnverlauferfassungssystem (12) erfassbar ist.

5. Fahrerassistenzvorrichtung nach einem der vorhergehenden Ansprüche,
**dadurch gekennzeichnet,**
**dass** die Fahrerassistenzvorrichtung (10) mindestens einen Fahrzeugsensor zum Erfassen eines Fahrzustands des Fahrzeugs, insbesondere einer Geschwindigkeit und/oder einer Position und/oder einer Bewegungsrichtung und/oder einer Lenkradstellung und/oder einer Räderstellung des Fahrzeugs und/oder eines Reibwertes zwischen Fahrbahn und mindestens eines Reifens des Fahrzeugs und/oder einer Querbeschleunigungsgrenze des Fahrzeugs und/oder einer Schäglaufsteifigkeit mindestens eines Reifens des Fahrzeugs und/oder mindestens einer maximal auf das Fahrzeug übertragbaren Seitenkraft, umfasst.

6. Fahrerassistenzvorrichtung nach einem Ansprüche 4 oder 5,
**dadurch gekennzeichnet,**
**dass** die Fahrerassistenzvorrichtung (10) eine Istkursbestimmungseinheit (18) zum Bestimmen eines Istkurses des Fahrzeugs anhand des erfassten Fahrzustands aufweist, wobei der Istkurs einem zukünftigen potentiellen Kurs des Fahrzeugs ohne Unterstützung durch die Fahrerassistenzvorrichtung (10) entspricht.

7. Fahrerassistenzvorrichtung nach einem der vorhergehenden Ansprüche,
**dadurch gekennzeichnet,**
**dass** die Fahrerassistenzvorrichtung (10) eine Speichereinheit (16) aufweist, wobei in der Speichereinheit (16) mindestens ein Fahrzeugparameter, insbesondere eine Fahrzeuggeometrie und/oder eine Reifeneigenschaft und/oder eine Massenträgheit und/oder eine Massenverteilung und/oder eine Drehträgheit und/oder eine Lenkübersetzung des Fahrzeugs, abgelegt ist.

8. Fahrerassistenzvorrichtung nach einem der Ansprüche 4 bis 7,
**dadurch gekennzeichnet,**
**dass** die Sollkursbestimmungseinheit (14) derart ausgebildet und mit dem Fahrbahnverlauferfassungssystem (12) und/oder mit dem mindestens einen Fahrzeugsensor und/oder mit der Istkursbestimmungseinheit (18) und/oder mit der Speichereinheit (16) gekoppelt ist, dass bei der Bestimmung des Sollkurses durch die Sollkursbestimmungseinheit (14) der Fahrzustand und/oder der Istkurs und/oder der mindestens eine Fahrzeugparameter eingeht.

9. Fahrerassistenzvorrichtung nach einem der Ansprüche 4 bis 8,
**dadurch gekennzeichnet,**
**dass** die Fahrerassistenzvorrichtung eine Solllenkwinkelbestimmungseinheit (36) aufweist, die derart ausgebildet ist und mit dem Fahrbahnverlauferfassungssystem (12) und/oder mit dem mindestens einen Fahrzeugsensor und/oder mit der Istkursbestimmungseinheit (18) und/oder mit der Speichereinheit (16) gekoppelt ist, dass bei der Bestimmung des Solllenkwinkelverlaufs durch die Sol/lenkwinkelbestimmungseinheit (36) der Fahrzustand und/oder der Istkurs und/oder der mindestens eine Fahrzeugparameter eingeht.

10. Fahrerassistenzvorrichtung nach einem der Ansprüche 4 bis 9,
**dadurch gekennzeichnet,**
**dass** der Lenkmomentaktuator (38) derart ausgebildet und mit dem Fahrbahnverlauferfassungssystem (12) und/oder mit dem mindestens einen Fahrzeugsensor und/oder mit der Istkursbestimmungseinheit (18) und/oder mit der Speichereinheit (16) gekoppelt ist, dass bei der Bestimmung der synthetischen Zusatzkraft der Fahrzustand und/oder der Istkurs und/oder der mindestens eine Fahrzeugparameter eingeht.

11. Fahrerassistenzvorrichtung nach einem der vorhergehenden Ansprüche,
**dadurch gekennzeichnet,**
**dass** das Fahrbahnverlauferfassungssystem (12) derart ausgebildet ist, dass durch das Fahrbahnverlauferfassungssystem (12) ein Fahrspurverlauf ermittelt werden kann, der durch den Fahrbahnverlauf begrenzt ist, wobei der durch die Sollkursbestimmungseinheit (14) bestimmte Sollkurs zumindest durch den Fahrspurverlauf begrenzt ist.

12. Fahrerassistenzvorrichtung nach einem der vorhergehenden Ansprüche,
**dadurch gekennzeichnet,**
**dass** die von dem Lenkmomentaktuator (38) erzeugte und auf das Lenkrad wirkende Zusatzkraft ein Zusatzlenkmoment und/oder eine Zusatzreibung und/oder eine Zusatzdämpfung ist.

13. Fahrerassistenzverfahren zur Unterstützung eines Fahrers eines Fahrzeugs bei einer Kursbestimmung umfassend folgende Schritte:
a. Erfassen eines Fahrbahnverlaufs;
b. Bestimmen eines Sollkurses anhand des erfassten Fahrbahnverlaufs, wobei der Sollkurs zumindest durch den Fahrbahnverlauf begrenzt ist und so bestimmt wird, dass mindestens eines der folgenden Fahrkriterien minimiert ist:
Fahrzeit, Kraftschlussbeanspruchung,
wobei bei einer Minimierung der Kraftschlussbeanspruchung mindestens einer der folgenden Werte als variabel berücksichtigt wird:
- ein Reibwert zwischen einer Fahrbahn und mindestens einem Reifen
- eine Schräglaufsteifigkeit mindestens eines Reifens
c. Erzeugen einer synthetischen Zusatzkraft, die derart auf ein Lenkrad des Fahrzeugs wirkt, dass das Lenkrad leichter in eine Lenkrichtung bewegt werden kann, durch die das Fahrzeug in Richtung Sollkurs gesteuert wird, als in eine entgegengesetzte Lenkrichtung.

## Claims

1. Device for assisting a driver of a vehicle to determine a route, comprising:
- a road-course recording system (12) for determining the course of a road,
- a required-course determination unit (14) for determining a required course in connection with the recorded road course, whereby the required course is at least limited by the course of the road, and
- a steering momentum actuator (38) for producing a synthetic, additional force that acts on the vehicle's steering-wheel such that the steering wheel can be moved more easily in a steering direction in which the vehicle is controlled in the direction of the required course than in an opposite direction, **characterized in that** the required course determination unit (14) is designed such that the required course is determined such that at least one of the following driving criteria is minimized:
- the journey time
- the closed linkage loading
whereby, when minimizing the closed linkage loading, at least one of the following values is regarded as being variable:
- a value of friction between a road and at least one tyre
- the rigidity, when running at an inclined angle, of at least one tyre.

2. Driver assistance device in accordance with claim 1,
**characterized in that**
the device for assisting a driver comprises a unit for determining a required steering angle (36), for determining a required steering-angle path in connection with the recorded required course, whereby the required steering-angle determination unit (36) is connected to the steering momentum actuator (38) such that a synthetic, additional force is in each case produced, by means of the steering momentum actuator (38), by means of which the steering wheel can be moved more easily in a direction of a required steering angle of the required path than in an opposite direction.

3. Driver assistance device in accordance with one of claims 1 or 2,
**characterized in that**
the system for recording the course of the road (12) comprises an image-processing system, particularly one with a video-camera and/or a GPS point-determination system and at least one digital road map.

4. Driver assistance device in accordance with one of the preceding claims,
**characterized in that**
the system (12) for recording the course of the road is formed such that a travelling status of the vehicle, particularly a speed and/or a position and/or a direction in which the vehicle is moving can be recorded by means of the road-course recording system (12).

5. Driver assistance device in accordance with one of the preceding claims,
**characterized in that**
the driver assistance device (10) comprises at least one vehicle sensor for recording a state of motion of the vehicle, particularly a speed and/or a position and/or a direction of movement and/or a steering-wheel position and/or a setting of a vehicle's wheels and/or friction between a road and at least one tyre of the vehicle and/or a lateral acceleration limit of the vehicle and/or rigidity, when at least one tyre is running at an inclined angle, and/or at least one maximum lateral force that can be transmitted to the vehicle.

6. Driver assistance device in accordance with one of claims 4 or 5,
**characterized in that**
the driver assistance device (10) has a unit (18) for determining the actual course of the vehicle in connection with the recorded status of motion, whereby the actual course corresponds to a subsequent or future course of the vehicle without the support of the driver assistance device (10).

7. Driver assistance device in accordance with one of the preceding claims,
**characterized in that**
the driver assistance device (10) has a storage unit (16), whereby at least one vehicle parameter, particularly vehicle geometry and/or a tyre-related quality and/or a mass inertia moment and/or steering transmission of the given vehicle is stored.

8. Driver assistance device in accordance with one of claims 4 to 7,
**characterized in that**
the required course recording system (14) is developed and connected to the road-course recording system (12) and to the at least one vehicle sensor and/or to the unit (18) that determines the actual course of the vehicle and/or to the storage unit (16), such that the state of movement and/or the actual course and/or at least one vehicle parameter is entered when the required course is determined by means of the required-course determination unit (14).

9. Driver assistance device in accordance with one of claims 4 to 8,
**characterized in that**
the driver assistance device has a unit (36) for determining the required steering angle that is developed and connected to the road-course recording system (12) and/or to the at least one vehicle sensor and/or to the actual-course determination unit (18) and/or to the storage unit (16) such that the driving status and/or the actual course and/or the at least one vehicle parameter is entered when the required steering angle path is determined by the unit (36) for determining the required steering angle path.

10. Driver assistance device in accordance with one of claims 4 to 9,
**characterized in that**
the steering momentum actuator (38) is developed and connected to the at least one vehicle sensor and/or to the actual-course determination-unit (18) and/or to the storage unit (16), such the driving status and/or the actual course and/or the at least one vehicle parameter is entered when the synthetic, additional force is determined.

11. Driver assistance device in accordance with one of the above claims,
**characterized in that**
the system for recording the course of the road (12) is developed such that a driving course, which is limited by the course of the road, can be determined, through the system for recording the course of the road (12), whereby the required course determined by means of the required-course determination-unit (14) is at least limited by the course of the driving trace.

12. Driver assistance device in accordance with one of the above claims,
**characterized in that**
the additional force, produced by the steering momentum actuator (38) and acting on the steering wheel, is an additional steering momentum and/or additional friction and/or additional damping.

13. Driver assistance process to support the driver of a vehicle with determination of the course, of the given vehicle, comprising the following stages:
a. The recording of a road course
b. Ascertainment of a required course in connection with the recorded road course, whereby the required course is at least limited by the course of the road and is determined such that at least one of the following driving criteria is minimized:
driving, closed linkage loading,
whereby, when the closed linkage loading is minimized, at least one of the
following values is taken into account as a variable:
- a value of friction between a road and at least one tyre
- the rigidity, when running at an inclined angle, of at least one tyre
c. Production of a synthetic, additional force that acts on a steering wheel of the vehicle such that the steering wheel can be moved more easily in a steering direction in which the vehicle is controlled in the direction of the required course, than in an opposite direction.

## Revendications

1. Dispositif d'assistance au conducteur destiné à aider le conducteur d'un véhicule à déterminer un cap comportant
- un système de détection de tracé de chaussée (12) destiné à détecter un tracé de chaussée,
- une unité de détermination de cap théorique (14) destinée à déterminer un cap théorique en s'appuyant sur le tracé de chaussée, le cap théorique étant limité au moins par le tracé de chaussée, et
- un actionneur de couple de pilotage (38) destiné à générer une force additionnelle synthétique qui agit sur un volant du véhicule de telle sorte que le volant peut être déplacé plus facilement dans une direction de pilotage, par laquelle le véhicule est commandé en direction du cap théorique, que dans une direction de pilotage opposée, **caractérisé en ce que**
- l'unité de détermination de cap théorique (14) est dimensionnée de telle sorte que le cap théorique est déterminé de sorte qu'au moins un des critères de conduite suivants est minimisé :
- temps de conduite
- contrainte d'adhérence
sachant qu'au cours d'une minimisation de la contrainte d'adhérence, au moins une des valeurs suivantes est prise en compte comme variable :
- un coefficient de frottement entre une chaussée et au moins un pneu
- une résistance au dérapage d'au moins un pneu.

2. Dispositif d'assistance au conducteur selon la revendication 1,
**caractérisé en ce que**
le dispositif d'assistance au conducteur comporte une unité de détermination d'angle de pilotage théorique (36) destinée à déterminer un tracé d'angle de pilotage théorique en s'appuyant sur le cap théorique détecté, l'unité de détermination d'angle de pilotage théorique (36) étant couplée à l'actionneur de couple de pilotage (38) de telle sorte que respectivement une force additionnelle synthétique est produite par l'actionneur de couple de direction (38), grâce à laquelle le volant peut être déplacé plus facilement dans la direction de pilotage d'un angle de pilotage théorique respectif du tracé d'angle de pilotage théorique que dans une direction de pilotage opposée.

3. Dispositif d'assistance au conducteur selon l'une quelconque des revendications 1 ou 2,
**caractérisé en ce que**
le système de détection de tracé de chaussée (12) destiné à détecter le tracé de la chaussée comporte un système de traitement d'image, doté en particulier d'une caméra vidéo, et/ou un système de localisation GPS et au moins une carte routière numérique.

4. Dispositif d'assistance au conducteur selon l'une quelconque des revendications précédentes,
**caractérisé en ce que**
le système de détection de tracé de chaussée (12) est conçu de telle sorte qu'un état de conduite du véhicule, en particulier une vitesse et/ou une position et/ou une direction de déplacement du véhicule, peut être détecté par le système de détection de tracé de chaussée (12).

5. Dispositif d'assistance au conducteur selon l'une quelconque des revendications précédentes,
**caractérisé en ce que**
le dispositif d'assistance au conducteur (10) comporte au moins un capteur de véhicule destiné à détecter un état de conduite du véhicule, en particulier une vitesse et/ou une position et/ou une direction de déplacement et/ou une position du volant et/ou une position des roues du véhicule et/ou un coefficient de frottement entre la chaussée et au moins un pneu du véhicule et/ou une limite d'accélération transversale du véhicule et/ou une résistance au dérapage d'au moins un pneu du véhicule et/ou au moins une force latérale pouvant être transférée au maximum sur le véhicule.

6. Dispositif d'assistance au conducteur selon l'une quelconque des revendications 4 ou 5,
**caractérisé en ce que**
le dispositif d'assistance au conducteur (10) comprend une unité de détermination de cap effectif (18) destinée à déterminer un cap effectif du véhicule en s'appuyant sur l'état de conduite détecté, le cap effectif correspondant à un futur cap potentiel du véhicule ne bénéficiant pas de l'aide du dispositif d'assistance au conducteur (10).

7. Dispositif d'assistance au conducteur selon l'une quelconque des revendications précédentes,
**caractérisé en ce que**
le dispositif d'assistance au conducteur (10) comprend une unité de mémoire (16), au moins un paramètre du véhicule, en particulier une géométrie du véhicule et/ou une propriété du pneu et/ou une inertie de la masse et/ou une distribution pondérale et/ou une inertie de rotation et/ou une transmission de couple de pilotage, étant mémorisé dans l'unité de mémoire (16).

8. Dispositif d'assistance au conducteur selon l'une quelconque des revendications 4 à 7,
**caractérisé en ce que**
l'unité de détermination de cap théorique (14) est conçue et couplée au système de détection de tracé de chaussée (12) et/ou à au moins un capteur de véhicule et/ou à l'unité de détermination de cap effectif (18) et/ou à l'unité de mémoire (16) de telle sorte que lorsque l'unité de détermination de cap théorique (14) détermine le cap théorique, l'état de conduite et/ou le cap effectif et/ou le au moins un paramètre de véhicule intervient.

9. Dispositif d'assistance au conducteur selon l'une quelconque des revendications 4 à 8,
**caractérisé en ce que**
le dispositif d'assistance au conducteur comprend une unité de détermination d'angle de pilotage théorique (36), qui est conçue et couplée au système de détection de tracé de chaussée (12) et/ou à le au moins un capteur de véhicule et/ou à l'unité de détermination de cap effectif (18) et/ou à l'unité de mémoire (16) de telle sorte que lorsque l'unité de détermination d'angle de pilotage théorique (36) détermine le tracé d'angle de pilotage théorique, l'état de conduite et/ou le cap effectif et/ou le au moins un paramètre de véhicule intervient.

10. Dispositif d'assistance au conducteur selon l'une quelconque des revendications 4 à 9,
**caractérisé en ce que**
l'actionneur de couple de pilotage (38) est conçu et couplé au système de détection de tracé de chaussée (12) et/ou à le au moins un capteur de véhicule et/ou à l'unité de détermination de cap effectif (18) et/ou à l'unité de mémoire (16) de telle sorte que lorsque la force additionnelle synthétique est déterminée, l'état de conduite et/ou le cap effectif et/ou le au moins un paramètre de véhicule intervient.

11. Dispositif d'assistance au conducteur selon l'une quelconque des revendications précédentes,
**caractérisé en ce que**
le système de détection de tracé de chaussée (12) est conçu de telle sorte qu'un tracé de voie de circulation peut être déterminé par le système de détection de tracé de chaussée (12), lequel tracé est délimité par le tracé de chaussée, le cap théorique défini par l'unité de détermination de cap théorique (14) étant délimité au moins par le tracé de voie de circulation.

12. Dispositif d'assistance au conducteur selon l'une quelconque des revendications précédentes,
**caractérisé en ce que**
la force additionnelle produite par l'actionneur de couple de pilotage (38) et agissant sur le volant est un couple de pilotage additionnel et/ou un frottement additionnel et/ou un amortissement additionnel.

13. Dispositif d'assistance au conducteur destiné à aider le conducteur d'un véhicule à déterminer un cap comportant les étapes suivantes :
a. détection d'un tracé de chaussée ;
b. détermination d'un cap théorique en s'appuyant sur le tracé de chaussée détecté, le cap théorique étant limité au moins par le tracé de chaussée et déterminé de sorte qu'au moins un des critères de conduite suivants est minimisé :
temps de conduite, contrainte d'adhérence,
sachant que lorsque la contrainte d'adhérence est minimisée, au moins une des valeurs suivantes est prise en compte comme variable :
- un coefficient de frottement entre une chaussée et au moins un pneu
- une résistance au dérapage d'au moins un pneu
c. génération d'une force additionnelle synthétique qui agit sur un volant du véhicule de telle sorte que le volant peut être déplacé plus facilement dans une direction de pilotage, grâce à laquelle le véhicule est commandé en direction du cap théorique, que dans une direction de pilotage opposée.
